# EUROPEAN PATENT SPECIFICATION

(11) **EP 0 498 088 B1**
(45) Date of publication and mention of the grant of the patent: **05.07.1995**
(21) Application number: 91203237.2
(22) Date of filing: 11.12.1991
(51) Int. Cl.: C08F 283/08

(54) **Method of preparing a mixture of polyphenylene ether and polyvinylaromatic compound**
Verfahren zur Herstellung einer Mischung einer Polyvinyläther mit einer Polyvinylaromat
Méthode de préparation d'un mélange d'éther de polyphénylène et d'un composé polyvinylaromatique

(30) Priority: 08.02.1991 NL 9100224
(43) Date of publication of application: 12.08.1992
(73) Proprietor: GENERAL ELECTRIC COMPANY, Schenectady, NY 12345 (US)
(72) Inventor: Viersen, Frits Jan, NL-4600 AC Bergen op Zoom (NL)
(74) Representative: Grever, Frederik

(56) References cited:
- EP-A- 0 017 939
- FR-A- 2 027 612
- US-A- 3 384 682
- US-A- 3 862 263

## Description

The invention relates to a method of preparing a mixture of polyphenylene ether (PPE) and polyvinylaromatic compound having a content of polyphenylene ether of at least 20% by weight by radical polymerisation of the vinylaromatic compound in the presence of polyphenylene ether.

In this connection the term vinylaromatic compound comprises styrene and the various derivatives of styrene, as further defined herein. In so far as this is not explicitly clear from the text, the term also includes the said derivatives.

It is known to prepare mixtures of polyphenylene ether and polyvinylaromatic compound by mixing the two individually prepared components.

In the in situ preparation of such mixtures by polymerisation of styrene in the presence of polyphenylene ether, the problem presents itself that, in preparing products having a content of polyphenylene ether of more than 20% by weight, the viscosity of the system becomes so high that a justified performance of the reaction is no longer possible. Since the content of PPE in the final product is substantially decisive of the maximum temperature resistance of the resulting product, this therefore considerably restricts the applicability of the direct preparation of polyphenylene ether/polystyrene (PPE/PS) mixtures. When such mixtures are used in foamed products the maximally achievable Tg according to this route is approximately 136°C.

It is an object of the present invention to provide a method of polymerising a vinylaromatic compound in the presence of polyphenylene ether, in which a considerably higher content of polyphenylene ether in the final product is achievable.

The invention therefore relates to a method of preparing a mixture of polyphenylene ether and a polyvinyl-aromatic compound having a content of polyphenylene ether of at least 20% by weight by radical polymerisation of the vinylaromatic compound in the presence of polyphenylene ether, which method is characterised in that the polymerisation is carried out in a dispersion of an organic phase in an aqueous phase, in the presence of an emulsifier, in that the polymerisation is initiated partly from the aqueous phase and partly from the organic phase, and in that, after completion of the polymerisation, the product obtained by initiation from the aqueous phase is separated at least partly from the product obtained by initiation from the organic phase.

The invention is based on the surprising recognition of the fact that by a combined polymerisation from the aqueous phase and from the organic phase, on the one hand a latex of particles of the polyvinylaromatic compound (PS) is formed, and on the other hand a suspension of PPE/PS particles is formed. In other words: here we have a simultaneous emulsion and suspension polymerisation.

The polymerisation is preferably carried out while using a combination of a water-soluble initiator and an oil-soluble initiator, which means an initiator which is soluble in the organic phase, c.q. the monomer or the monomers.

The product which is formed by initiation from the aqueous phase comprises a latex of particles of the polyvinylaromatic compound. These particles are rather well stabilised and will in principle remain dispersed in the aqueous phase. The PPE/PS particles formed by initiation from the organic phase are considerably larger than the particles of the polyvinylaromatic compound and will deposit rather rapidly in the absence of stirring. The size of these particles will in general be at least 0.1 mm, while the maximum is approximately 2 mm. The diameter of the particles in the latex will in general be a factor 100 lower, i.e. these particles have diameters from 10 to 1,000 nm.

So in carrying out the method according to the invention a polymerisation in the latex particles or micells is obtained on the one hand by migration of the monomer from the organic phase to the micells. As a result of this a part of the monomer is in fact withdrawn from the PPE/PS mixtures during the formation thereof, so that a higher content of polyphenylene ether is polymerised in the drops.

The content of polyphenylene ether which can be obtained according to the invention is at least 20% by weight, preferably at least 40% by weight in the mixtures. The upper limit is determined substantially by the manner of carrying out the polymerisation. This value will in general not be higher than 95% by weight.

The polymerisation is carried out under the usual conditions for polymerisation of styrene and/or derivatives thereof in emulsions and/or suspensions. The initiator and/or initiator systems are the known initiators and/or initiator systems for these polymerisations. In principle, any initiator which has sufficient solubility in the aqueous phase, i.e. the solubility in the aqueous phase is at least ten times, preferably 100 times, as large as in the organic phase, may be used as a water-soluble initiator. An example of a suitable initiator is potassium persulphate. Other initiators, for example, hydrogen peroxide, or combinations of such initiators with a redox system, for example, a redox system based on iron(II) salts, may also be used.

The initiator for the organic phase may be an oil-soluble initiator, for example, azobisisobutyronitrile or benzoyl peroxide, optionally in combination with a redox system. Essential again is that the initiator is substantially soluble only in the oil phase or styrene phase.

Examples of initiators to be used are the already mentioned compounds, but also decanoyl peroxide, lauryl peroxide, octanoyl peroxide, stearoyl peroxide, 3,5,5-trimethyl hexanoyl peroxide, t-butyl perbenzoate, t-butyl peracetate, t-butyl perpivalate, diisopropyl phenyl hydroperoxide, 2,5-dimethyl-2,5-di-t-butyl peroxyhexane, di-t-butyl peroxide, cyclohexanone peroxide, dicumyl peroxide, t-butyl peroxyisobutyrate and t-butyl peroxylaurate, as well as mixtures of two or more of the said initiators.

The ratio of the quantities of the initiators may vary within wide limits. In general the quantity of water-soluble initiator on a molar base is larger than the quantity of oil-soluble initiator. The molar ratio of the quantity of water-soluble initiator to oil-soluble initiator preferably exceeds 1 but is smaller than 100, more in particular smaller than 75. The content of polyphenylene ether in the mixtures may be influenced by variation of this ratio, the content being higher when the ratio is larger.

In this connection it is to be noted that it is also possible to use only a water-soluble initiator to obtain a very high PPE content. Since some initiator will always be present in the organic phase a small initiation will also occur there, while in addition a part of the formed active chains migrates to the organic phase and further polymerises there.

The product of the polymerisation is used in particular for making foamable PPE/PS. For this purpose a physical blowing agent is generally incorporated in the system. This is preferaly done by polymerising the styrene in the presence of the physical blowing agent. Examples of blowing agents to be used are inter alia low-boiling-point hydrocarbons, esters, and ethers.

The polymerisation is preferably carried out so that a solution of 25-45% by weight of polyphenylene ether in the vinylaromatic compound, preferably styrene - optionally in combination with one or more other organic solvents and having dissolved therein an initiator which is soluble in the oil phase - is suspended in an aqueous phase which comprises an emulsifier and a water-soluble initiator.

By raising the temperature the polymerisation may be started while stirring the mixture. After some time the polymerisation will be completed, which time may be between preferably 5 and 15 hours. The level of non-converted styrene is preferably reduced to a very low level, for example, to a value of less than 0.5%, more in particular less than 0.05%. After completion of the polymerisation at least a part of the latex, preferably 75% and most preferably 90% of the product obtained by initiation from the aqueous phase, should be separated from the latex of the PPE/PS particles. This may be done, for example, by causing the particles to settle, after which the latex may be decanted. However, it is also possible to separate the particles from the latex by centrifuging and/or filtering. The remaining particles are then washed and optionally further processed to PPE/PS blends in the conventional manner.

The remaining latex may be coagulated and further processed to polystyrene in known manner. This is one of the advantageous aspects of the present invention, since the resulting polystyrene latex can be processed to commercially useful polystyrene without any problems. In fact, the properties of the polystyrene thus obtained are comparable to polystyrene obtained conventionally by emulsion polymerisation.

Instead of styrene, derivatives of styrene, for example, alpha-methyl styrene, styrenes substituted in the nucleus, vinyl toluenes and mixtures of two or more vinylaromatic compounds may also be used. Optionally, one or more other comonomers may also be used, for example, acrylonitrile, methacrylonitrile, acrylates or methacrylates, N-vinyl carbizole, maleic acid anhydride, as well as compounds having two or more vinyl groups, for example, divinyl benzene, butadiene and isoprene.

Poly(2,6-dimethyl-1,4-phenylene ether), whether or not 'capped' is preferably used as a polyphenylene ether. It is preferred that a polyphenylene ether is used of which at least a part of the reactive terminal groups is capped. This capping involves that the reactive phenolic terminal groups of the polymer are provided with specific terminal groups, for example, by reaction with ester-forming or ether-forming reagents. Suitable methods of providing such terminal groups are described in literature. For this purpose see, for example, the United States Patent Specifications 4,048,143 and 3,375,228 and the European Patent Applications 283,775 and 385,065.

The emulsifier used may be chosen from the emulsifiers known for emulsion polymerisation of vinylaromatic compounds, for example, of disproportioned abietic acid and of fatty acids, alkyl sulphonates and alkyl aryl sulphonates. Optionally, a suspension stabiliser, for example, polyvinyl alcohol, kaolin, cellulose or alkaline earth metal phosphate may also be used.

The PPE/PS blends may be used for various applications. For example, it is possible to impregnate the particles with a blowing agent, so that these can be processed to form a PPE/PS foam. This impregnation with blowing agent may take place both after the polymerisation and during or prior to the polymerisation.

The invention will now be described in greater detail with reference to a few examples to which, however, the Application is by no means to be restricted.

### EXAMPLES

A solution of a capped polyphenylene ether (poly(2,6-dimethyl-1,4-phenylene ether)) in styrene was dispersed in water in a stirred reactor in the presence of an emulsifier and 7.5 g/l of polyvinyl alcohol. An initiator system based on a water-soluble initiator (K₂S₂O₈) and an oil-soluble initiator (azobisisobutyronitrile, AIBN) was also incorporated in the dispersion.

The polymerisation of styrene was started by raising the temperature in the reactor. After termination of the polymerisation the resulting polystyrene latex was separated from the PPE/PS grains by filtration. The polystyrene latex was coagulated with HCl, filtered off and washed with water. The results of various tests with different systems are recorded in the table.

**TABLE**

| PPE/S^{§} Weight | K₂S₂O₈ mol% | AIBN mol% | PPE/PS | | PPE/Ps Weight | PS Yield |
|---|---|---|---|---|---|---|
| | | | Yield | Tg °C | | |
| 35/65 | 0.25 | 0.05 | 69% | 148 | 44/54 | - |
| 35/65 | 0.3 | 0.03 | 64% | 163 | 50/43 | 33% |
| 35/65 | 0.3 | 0.015 | 59% | 157 | 46/46 | 35% |
| 35/65 | 0.4 | 0.015 | 55% | 163 | 60/35 | 39% |
| 35/65 | 0.4 | 0.008 | 54% | 162 | 61/33 | - |
| 35/65 | 0.5 | 0 | 40% | 173 | 84/18 | - |
| - not determined | | | | | | |

| | | | | | | |
|---|---|---|---|---|---|---|
| § styrene monomer | | | | | | |

## Claims

1. A method of preparing a mixture of polyphenylene ether and polyvinylaromatic compound having a content of polyphenylene ether of at least 20% by weight by radical polymerisation of the vinylaromatic compound in the presence of polyphenylene ether, characterised in that the polymerisation is carried out in a dispersion of an organic phase in an aqueous phase, in the presence of an emulsifier, in that the polymerisation is initiated partly from the aqueous phase and partly from the organic phase, and in that, after completion of the polymerisation, the product obtained by the initiation from the aqueous phase is separated at least partly from the product obtained by initiation from the organic phase.

2. A method as claimed in Claim 1, characterised in that a mixture is prepared of polyphenylene ether and polystyrene having a content of polyphenylene ether of at least 40% by weight.

3. A method as claimed in Claim 1 or 2, characterised in that the polymerisation is carried out with a combination of a water-soluble initiator and an oil-soluble initiator.

4. A method as claimed in Claim 3, characterised in that potassium persulphate or hydrogen peroxide is used as a water-soluble initiator.

5. A method as claimed in Claims 1-4, characterised in that the initiation from the organic phase is carried out while using azobisisobutyronitrile, benzoyl peroxide, decanoyl peroxide, lauryl peroxide, octanoyl peroxide, stearoyl peroxide, 3,5,5-trimethyl hexanoyl peroxide, t-butyl perbenzoate, 6-butyl peracetate, t-butyl perpivalate, diisopropyl phenyl hydroperoxide, 2,5-dimethyl-2,5-di-t-butyl peroxyhexane, di-t-butyl peroxide, cyclohexanone peroxide, dicumyl peroxide, t-butylperoxyisobutyrate and t-butyl peroxylaurate, as well as mixtures of two or more of the said initiators.

6. A method as claimed in Claims 1-5, characterised in that a polyphenylene ether is used of which at least a part of the reactive terminal groups is capped.

7. A method as claimed in Claims 1-6, characterised in that at least 75% of the product obtained by initiation from the aqueous phase is separated from the product obtained by initiation from the organic phase.

8. A method as claimed in Claim 7, characterised in that at least 80%, more in particular at least 90%, of the product obtained by initiation from the aqueous phase is removed.

9. A method as claimed in Claims 1-8, characterised in that the separation of the product obtained by initiation from the aqueous phase is carried out by settling and/or centrifuging of the reaction mixture.

10. A method as claimed in Claims 1-9, characterised in that a solution of polyphenylene ether in at least one vinyl-aromatic compound, optionally in combination with one or more organic solvents, is suspended in an aqueous phase which comprises an emulsifier and a water-soluble initiator, an oil-soluble initiator being present in the solution of polyphenylene ether.

11. A method as claimed in Claims 1-10, characterised in that a mixture of polyphenylene ether and polystyrene is prepared which comprises a physical blowing agent.

12. A method as claimed in Claim 11, characterised in that the polymerisation is carried out in the presence of the blowing agent.

13. A method as claimed in Claims 1-12, characterised in that the content of polyphenylene ether dissolved in the vinylaromatic compound, optionally in combination with one or more organic solvents, lies between 25 and 45% by weight, related to the weight of the solution.

14. A method as claimed in Claims 1-13, wherein styrene is used as a vinylaromatic compound, optionally in combination with one or more comonomers.

## Patentansprüche

1. Verfahren zur Herstellung einer Mischung aus Polyphenylenether und polyvinylaromatischer Verbindung mit einem Gehalt an Polyphenylenether von wenigstens 20 Gewichtsprozent durch Radikalpolymerisation der vinylaromatischen Verbindung in Anwesenheit von Polyphenylenether, dadurch gekennzeichnet, daß die Polymerisation in einer Dispersion einer organischen Phase in einer wässrigen Phase in Anwesenheit eines Emulgiermittels durchgeführt wird, und daß die Polymerisation teilweise aus der wässrigen Phase und teilweise aus der organischen Phase eingeleitet wird, und daß nach Vervollständigung der Polymerisation das durch Ingangsetzen aus der wässrigen Phase erhaltene Produkt wenigstens teilweise von dem Produkt, das durch Ingangsetzen aus der organischen Phase erhalten worden ist, abgetrennt wird.

2. Verfahren nach Anspruch 1, dadurch gekennzeichnet, daß eine Mischung von Polyphenylenether und Polystyrol mit einem Gehalt an Polyphenylenether von wenigstens 40 Gewichts-% hergestellt wird.

3. Verfahren nach Anspruch 1 oder 2, dadurch gekennzeichnet, daß die Polymerisation mit einer Kombination eines wasserlöslichen Initiators und eines öllöslichen Initiators durchgeführt wird.

4. Verfahren nach Anspruch 3, dadurch gekennzeichnet, daß Kaliumpersulfat oder Hydrogenperoxid als wasserlöslicher Initiator verwendet wird.

5. Verfahren nach den Ansprüchen 1 - 4, dadurch gekennzeichnet daß die Einleitung aus der organischen Phase unter Verwendung von Azobisisobutyronitril, Benzoylperoxid, Decanoyl-peroxid, Lauryl-peroxid, Octanoyl-peroxid, Stearoylperoxid, 3,5,5-Trimethylhexanoyl-peroxid, t-Butylperbenzoat, 6-Butylperacetat, t-Butyl-perpivalat, Diisopropyl-phenyl-hydroperoxid, 2,5-Dimethyl-2,5-di-t-butylperoxyhexan, Di-t-butyl-peroxid, Cyclohexanonperoxid, Dicumyl-peroxid, t-Butylperoxyisobutyrat und t-Butylperoxylaurat, sowie Mischungen aus zwei oder mehr der vorgenannten Initiatoren durchgeführt wird.

6. Verfahren nach den Ansprüchen 1 - 5, dadurch gekennzeichnet, daß ein Polyphenylenether verwendet wird, von dem wenigstens ein Teil der reaktionsfähigen Endgruppen verkappt ist.

7. Verfahren nach den Ansprüchen 1 - 6, dadurch gekennzeichnet, daß wenigstens 75 % des Produktes, welches durch Ingangsetzen aus der wässrigen Phase erhalten worden ist, von dem Produkt abgetrennt wird, welches durch Ingangsetzen aus der organischen Phase erhalten wurde.

8. Verfahren nach Anspruch 7, dadurch gekennzeichnet, daß wenigstens 80 %, vorzugsweise wenigstens 90 %, des durch Einleitung aus der wässrigen Phase erhaltenen Produktes entfernt werden.

9. Verfahren nach den Ansprüchen 1 - 8, dadurch gekennzeichnet, daß die Abtrennung des Produktes, welches durch Einleitung aus der wässrigen Phase erhalten worden ist, durch Absetzen und/oder Zentrifugieren der Reaktionsmischung durchgeführt wird.

10. Verfahren nach den Ansprüchen 1 - 9, dadurch gekennzeichnet, daß eine Lösung des Polyphenylenethers in wenigstens einer vinylaromatischen Verbindung, fakultativ in Kombination mit einem oder mehreren organischen Lösungsmitteln, in einer wäßrigen Phase suspendiert wird, welche ein Emulgiermittel und einen wasserlöslichen Initiator umfaßt und ein öllöslicher Initiator in der Lösung des Polyphenylenethers vorhanden ist.

11. Verfahren nach den Ansprüchen 1 - 10, dadurch gekennzeichnet, daß eine Mischung des Polyphenylenethers und des Polystyrols hergestellt wird, die ein physikalisches Schäummittel umfaßt.

12. Verfahren nach Anspruch 11, dadurch gekennzeichnet, daß die Polymerisation in Anwesenheit eines Schäummittels durchgeführt wird.

13. Verfahren nach den Ansprüchen 1 - 12, dadurch gekennzeichnet, daß der Gehalt an Polyphenylenether, der in der vinylaromatischen Verbindung gelöst ist, fakultativ in Kombination mit einem oder mehreren organischen Lösungsmitteln, zwischen 25 und 45 Gewichts-%, bezogen auf das Gewicht der Lösung, liegt.

14. Verfahren nach den Ansprüchen 1 - 13, worin Styrol als vinylaromatische Verbindung fakultativ in Kombination mit einem oder mehreren Comonomeren verwendet wird.

## Revendications

1. Procédé de préparation d'un mélange de poly(phénylène éther) et de poly(vinyl-aromatique), contenant au moins 20 % en poids de poly(phénylène éther), par polymérisation radicalaire d'un composé vinyl-aromatique en présence d'un poly(phénylène éther), caractérisé en ce que l'on effectue la polymérisation au sein d'une dispersion d'une phase organique dans une phase aqueuse, en présence d'un émulsifiant, en ce que la polymérisation est amorcée en partie dans la phase aqueuse et en partie dans la phase organique, et en ce que, une fois la polymérisation achevée, le produit obtenu par amorçage dans la phase aqueuse est séparé, au moins en partie, du produit obtenu par amorçage dans la phase organique.

2. Procédé conforme à la revendication 1, caractérisé en ce qu'on prépare un mélange de poly(phénylène éther) et de polystyrène contenant au moins 40 % en poids de poly(phénylène éther).

3. Procédé conforme à la revendication 1 ou 2, caractérisé en ce qu'on effectue la polymérisation à l'aide d'une combinaison d'un amorceur hydrosoluble et d'un amorceur oléosoluble.

4. Procédé conforme à la revendication 3, caractérisé en ce qu'on utilise, comme amorceur hydrosoluble, du persulfate de potassium ou du peroxyde d'hydrogène.

5. Procédé conforme à l'une des revendications 1 à 4, caractérisé en ce qu'on réalise l'amorçage dans la phase organique à l'aide d'azo-bis-isobutyronitrile, de peroxyde de benzoyle, de peroxyde de décanoyle, de peroxyde de lauryle, de peroxyde d'octanoyle, de peroxyde de stéaroyle, de peroxyde de 3,5,5-triméthyl-hexanoyle, de perbenzoate de t-butyle, de peracétate de t-butyle, de perpivalate de t-butyle, d'hydroperoxyde de di-isopropyl-phényle, de 2,5-diméthyl-2,5-di-t-butyl-peroxyhexane, de peroxyde de di-t-butyle, de peroxyde de cyclohexanone, de peroxyde de dicumyle, de peroxy-isobutyrate de t-butyle ou de peroxylaurate de t-butyle, ou d'un mélange de deux de ces amorceurs ou plus.

6. Procédé conforme à l'une des revendications 1 à 5, caractérisé en ce qu'on utilise un poly(phénylène éther) dont au moins une partie des groupes terminaux réactifs portent une coiffe.

7. Procédé conforme à l'une des revendications 1 à 6, caractérisé en ce qu'au moins 75 % du produit obtenu par amorçage dans la phase aqueuse sont séparés d'avec le produit obtenu par amorçage dans la phase organique.

8. Procédé conforme à la revendication 7, caractérisé en ce qu'on sépare au moins 80 %, et plus particulièrement, au moins 90 % du produit obtenu par amorçage dans la phase aqueuse.

9. Procédé conforme à l'une des revendications 1 à 8, caractérisé en ce qu'on effectue la séparation du produit obtenu par amorçage dans la phase aqueuse en faisant décanter le mélange réactionnel ou en le soumettant à une centrifugation.

10. Procédé conforme à l'une des revendications 1 à 9, caractérisé en ce qu'une solution d'un poly(phénylène éther) dans au moins un composé vinyl-aromatique, éventuellement combiné avec un ou plusieurs solvants organiques, est mise en suspension dans une phase aqueuse qui contient un émulsifiant et un amorceur hydrosoluble, alors qu'un amorceur oléosoluble se trouve dans la solution de poly(phénylène éther).

11. Procédé conforme à l'une des revendications 1 à 10, caractérisé en ce qu'on prépare un mélange de poly(phénylène éther) et de polystyrène contenant un agent d'expansion physique.

12. Procédé conforme à la revendication 11, caractérisé en ce qu'on effectue la polymérisation en présence de l'agent d'expansion.

13. Procédé conforme à l'une des revendications 1 à 12, caractérisé en ce que le poids du poly(phénylène éther) contenu en solution dans le composé vinyl-aromatique, éventuellement combiné avec un ou plusieurs solvants organiques, représente entre 25 et 45 % du poids de la solution.

14. Procédé conforme à l'une des revendications 1 à 13, caractérisé en ce qu'on utilise du styrène, éventuellement combiné avec un ou plusieurs comonomères, en tant que composé vinyl-aromatique.
